Europäisches Patentamt

European Patent Office

Office européen des brevets

(19)

(11) Publication number: **0 313 414**
**A1**

# (12) EUROPEAN PATENT APPLICATION

(21) Application number: **88309988.9**

(22) Date of filing: **24.10.88**

(51) Int. Cl.⁴: **A 01 N 25/06**
**B 05 B 7/24, B 65 D 83/14,**
**C 06 D 3/00**

(30) Priority: **23.10.87 AR 309102**

(43) Date of publication of application:
**26.04.89 Bulletin 89/17**

(84) Designated Contracting States:
**BE DE ES FR GB IT NL**

(71) Applicant: **Portas, Abelardo Antonio**
**Arcos 2757 - 1o piso "E"**
**1428 Buenos Aires (AR)**

(72) Inventor: **Portas, Abelardo Antonio**
**Arcos 2757 - 1o piso "E"**
**1428 Buenos Aires (AR)**

(74) Representative: **Crampton, Keith John Allen et al**
**D YOUNG & CO 10 Staple Inn**
**London WC1V 7RD (GB)**

(54) Process and apparatus for forming insecticidal and/or fungicidal mists.

(57) A process for forming insecticidal and/fungicidal mists comprises producing a first atomised flow of a composition comprising, per 100 cc, from 28 to 42 cc of aqueous ammonia at 26° Beaumé, 0.8 to 1.2 cc of ethylene glycol, 4 to 6 cc of propanetriol, 4 to 6 g of sodium chloride, 3.2 to 4.8 cc of ethanol, 16 to 24 cc of demineralised water and 24 to 36 cc of propellent; producing simultaneously with the first flow a second atomised flow of a composition comprising, per 100 cc, 12 to 18 cc of $SiCl_4$, 3.2 to 4.8 cc of $CCl_4$, 0.8 to 1.2 g of silver iodide, 12 to 18 cc of solvent(s), 12 to 18 cc of a insecticide, fungicide or a mixture thereof, and 40 to 60 cc of propellent; directing the two flows towards the same point and causing them to meet each other. Apparatus for carrying out the process comprises a a support fitment (1 to 5) for a container (6, 7) for each of the compounds corresponding to the first and second flows, each container being provided with an atomiser valve actuated by a pushbutton (8, 9) with an outlet orifice whose axis is directed to the same point of intersection, the two pushbuttons (8, 9) being connected by a depressor plate (10) on which there is disposed an actuating bar (11) which is pivotally connected to the support fitment (3).

Fig. 1.

EP 0 313 414 A1

**Description**

## PROCESS AND APPARATUS FOR FORMING INSECTICIDAL AND/OR FUNGICIDAL MISTS

The present invention relates to the formation of insecticidal and/or fungicidal mists or clouds and apparatus for carrying out such formation.

It is already known that a herbicide, insecticide, fungicide, pesticide or mixture thereof can be incorporated in silicon tetrachloride and the resulting mixture sprayed by means of a flow of inert gas to which ammonia and/or nitrogen-bearing compounds have been added.

The invention provides a process that comprises producing a first atomised flow of a composition comprising, per 100 cc, from 28 to 42 cc of aqueous ammonia at 26° Beaumé, 0.8 to 1.2 cc of ethylene glycol, 4 to 6 cc of propanetriol, 4 to 6 g of sodium chloride, 3.2 to 4.8 cc of ethanol, 16 to 24 cc of demineralised water and 24 to 36 cc of propellent; producing simultaneously with the first flow a second atomised flow of a composition comprising, per 100 cc, 12 to 18 cc of $SiCl_4$, 3.2 to 4.8 cc of $CCl_4$, 0.8 to 1.2 g of silver iodide, 12 to 18 cc of solvent(s), 12 to 18 cc of an insecticide, fungicide or a mixture thereof, and 40 to 60 cc of propellent; directing the two flows towards the same point and causing them to meet each other.

A preferred apparatus for carrying out the process of the invention is shown in the accompanying drawings in which:

Figure 1 is a perspective view of the apparatus;

Figure 2 is a side elevational view of the apparatus illustrated in Figure 1; and

Figure 3 is a plan view of the apparatus illustrated in the foregoing Figures.

Basically the process of the invention produces a mist or fog of particles of hydrated silica which carry an insecticide, a fungicide or a mixture of the two, with an associated mist or fog of particles of ammonium chloride which also carry in part the insecticide, fungicide or mixture of the two.

The basic mist, that is to say without insecticide, fungicide or mixture thereof, is produced by the simultaneous interaction of silicon tetrachloride ($SiCl_4$) with water vapour and ammonia, in accordance with the following:

$$SiCl_4 + sH_2O \text{ (as vapour)} \rightarrow SiO_2 \text{ (hydrated)} + 4HCl$$
$$4HCl + 4NH_3 \text{ (gas)} \rightarrow 4NH_4Cl$$

The two reactions take place simultaneously, mainly in a vapour phase, in such a way that they can in practice be reduced to the following reaction:

$$SiCl_4 + 4NH_3 + 2H_2O \rightarrow 4NH_4Cl + SiO_2$$

As the major part of the reaction takes place in the vapour phase, the result is mist of fog (more properly vaporisation) of finely divided particles of $SiO_2$ and $NH_4CL$, which particles occur approximately in an order size of 15 μm.

When exhaustive tests and experiments were carried out, it was found that the best practical results are achieved when the reaction involves about 1 part of commercial $SiCl_4$ with 1.5 parts of 10% ammonia solution. Bearing in mind that the commercial grade of $SiCl_4$ may be about 90% pure, it may be concluded that practical tests are very close to the theoretical quantities for producing a "neutral" mist with a small proportion of residual hydrochloric acid or ammonia.

The major constituent in the mist is ammonium chloride, which forms about 78% by weight, while $SiO_2$ represents 22% of the mist.

Nevertheless, since the $SiO_2$ is probably in the form of hydrated silica (the simplest form $H_2SiO_3$), it can be accepted in practice that the weights of the particles are in a ratio of 3 of $NH_4Cl$ to one of $SiO_2$.

In actual operation, the pesticide (which term is used herein to mean the insecticide, fungicide or mixture thereof) is mixed with the $SiCl_4$ in the liquid state and evaporates with the $SiCl_4$ as the reaction in the mist phase takes place. The pesticide is then bound to the particles of $NH_4Cl$ and $SiO_2$ by occlusion, absorption and surface adhesion and is transported with the mist to the desired locations.

On the basis of the well known properties of absorption and adsorption of hydrated silica, a large part of the pesticide is transported by the silica part of the mist more than by the ammonium chloride, although their weights in the mist are in opposite relationship. In any case, however, the carrier for the pesticide is the particles of mist, more than the vapour or fumes of those substances in themselves.

It can additionally be theorised that the novel, original and unexpected results of the high and immediate lethal effect for insects, as well as the immediate residual effect, which are achieved with the invention, are due to the fact that the soluble particles of ammonium chloride easily liberate a large proportion of the pesticide upon first contact, to produce the immediate lethal effect, and that the pesticide comes from the pores of the silica to adhere to the surfaces of insects and the regions around them.

In addition, since the pesticide is "part" of the particle of mist and can only be deposited when the particles are deposited, it can be said that when the pesticide is deposited or settles in some location, the mist does likewise and vice-versa and the pesticide obviously cannot become isolated and persist in the close vicinity of the dispersing device or spray device.

To provide for correction formation of the dense mist of ammonium chloride, it is ideal that the mist should not disperse rapidly, that is to say it should be stable for the greatest possible length of time, irrespective of the relative ambient humidity in the location at which it is produced.

For that purpose, there is added a mixture of aqueous ammonia, ethylene glycol, propanetriol and sodium chloride, which, due to its highly hygroscopic and surface-active qualities, permits of greater absorption of the ambient relative humidity by the particles of ammonium chloride to form a more dense mist and, once it is formed, to retain the pesticide contained in the particles of ammonium chloride by absorption, adsorption and surface tension, preventing the pesticide from volatilising and being dispersed in the atmosphere. In addition, by virtue of having specific physico-chemical properties of being soluble in water and acting as an anti-freeze, ethylene glycol promotes the formation of the mist on cold days at low temperatures (around 0°C). In addition the presence of propanetriol promotes and improves the properties of the microdrops of "spray" by the hygroscopic nature and surface tension, imparting to the mist the specific gravity or density required for persisting for the longest possible period of time, avoiding its rapid dissipation and thereby improving its insecticidal and/or fungicidal activity for the greatest period of exposure and promoting surface phenomena, absorption and adsorption by contact of the pesticide.

The addition of the $SiCl_4$ of carbon tetrachloride and silver iodide, due to their specific qualities for acting as condensation nuclei, forms larger particles of mist, e.g by coalescence, and thereby acts as a synergising factor in combining with sodium chloride and propanetriol. In addition $CCl_4$ with $SiCl_4$ forms a true ideal solution since, from the physico-chemical point of view, those liquids, on homogeneously mixing, do not give any variation in volume (expansion or contraction) or variation in temperature, the physical properties such as the refractive index, fluidity and vapour tension thereby having optimum values, with maintained stability in respect of the insecticidal and/or fungicidal effect in the microdrops of spary forming a micromolecular film due to the fluidifying action of the solvents and propellents/ propane, butane or chlorofluorocarbon.

For a perfect result from the process, it is absolutely necessary that the aqueous ammonia and additives and the $SiCl_4$ and additives be expelled from their containers simultaneously so that discharge of only one of them does not occur, owing to the problems that can arise from indiscriminate application of ammonia or chlorine.

The following will be set forth as an embodiment of the process, in one of its possible forms. A first atomised flow is produced, of a compound comprising, for 100 cc:

| | |
|---|---|
| Aqueous ammonia 26° Beaumé | 35 cc |
| Ethylene glycol | 1 cc |
| Propanetriol | 5 cc |
| Sodium chloride | 5 g |
| Ethanol | 4 cc |
| Demineralised water | 20 cc |
| Propellent | 30 cc |

A second atomised flow is produced, a compound comprising, for 100 cc:

| | |
|---|---|
| $SiCl_4$ | 15 cc |
| $CCl_4$ | 4 cc |
| Silver iodide | 1 g |
| Solvents | 15 cc |
| Insecticide, fungicide or mixture thereof | 15 cc |
| Propellent | 50 cc |

The two flows are produced at the same time and are directed towards the same point, causing them to come together to form a mist.

Of the various insecticidal compounds, only natural or synthetic pyrethrins such as permethrin, tetramethrin, cypermethrin, landaciholathrin, sumethrin, pralethrin, D-allethrin, D-empethrin, D-fenothrin, detamethrin, etc may be used with real effectiveness by means of the process of the invention since the quantity which as to be used is greatly reduced in comparison with chlorine-bearing or phosphorus-bearing insecticides. For example, comparing the doses required per hectare to combat Isoca bolillera of flax (Helicoverpa gelotopocon) the results are as follows:

| | |
|---|---|
| Chlorine-bearing insecticides | 1000 cc |
| Phosphorus-bearing insecticides | 800 cc |
| Pyrethrin | 4 to 12 cc |

That shows that small amounts of pyrethrins produce large effects, making them suitable for use in the process of the invention.

The apparatus for carrying out the process of the invention comprises a support framework which is preferably formed by a pair of bases 1 and 2 which are fixed together, a pair of struts or wall portions 3 and 4 which are disposed in facing relationship and which are connected at one of their ends to be bases 1 and 2, and a carrying handle 5 which projects from the member 4.

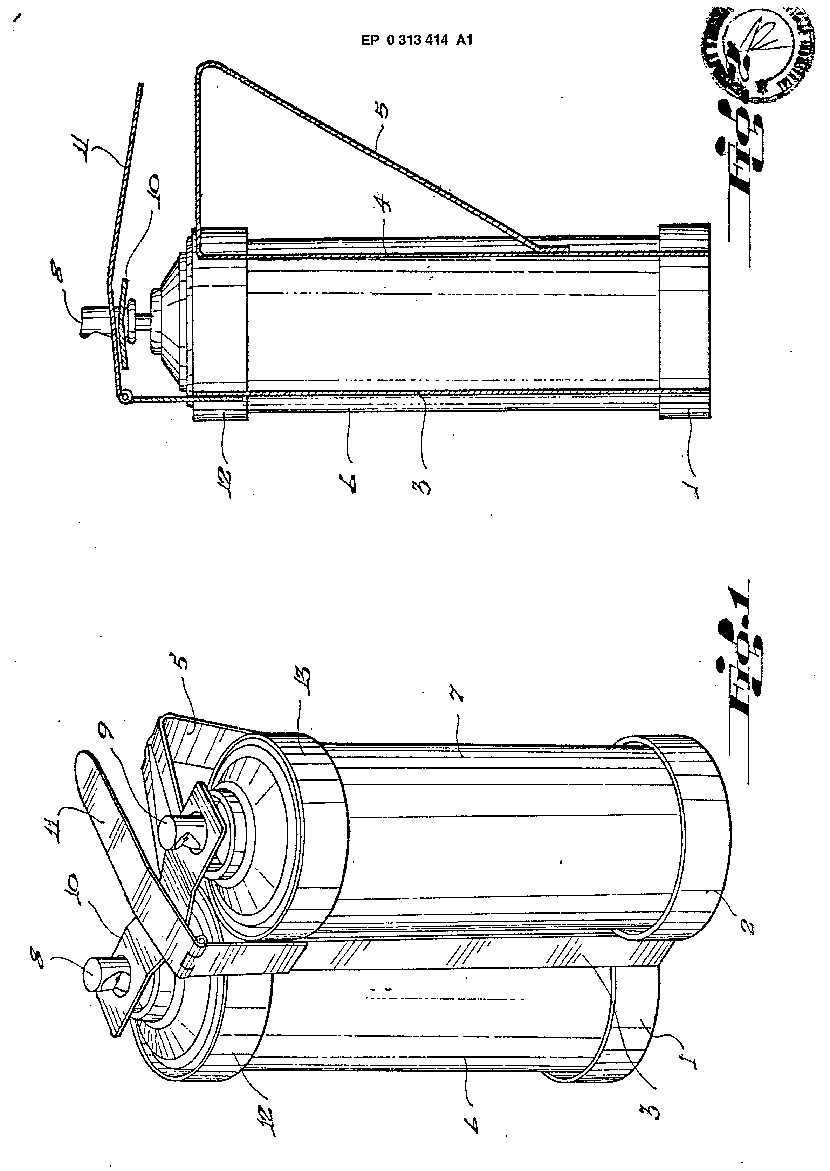

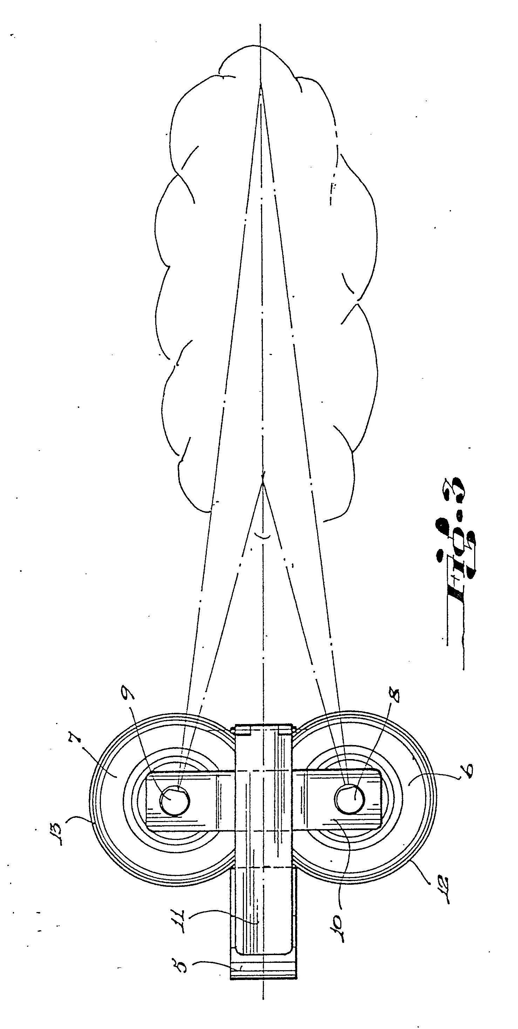

Supported in each one of the bases 1, 2 is the bottom of a corresponding container 6, 7 for each of the compounds for generating the first and second flows referred to above, each container being provided with an atomiser valve actuated by a pushbutton 8, 9. The outlet orifice of each pushbutton 8, 9, which is preferably of a diameter of between 0.30 and 0.55 mm, has its axis directed towards the same point of intersection, as can be seen, in accordance with different forms as illustrated by the broken lines in Figure 3, so that the first and second flows produced meet at the point at which the axes intersect, giving rise to the formation of the mist as already explained above.

The two pushbuttons are connected by a depressor plate 10, upon which rests an actuating bar 11 which is pivotally mounted by one of its ends to the free end of the member 3, the fitting being completed with the pair of guide hoops for the containers which are indicated at references 12 and 13.

By virtue of a pressure being applied to the free end of the actuating lever 11, the pushbuttons 8 and 9 are depressed at the same time, thereby jointly generating the first and second flows, which is an essential condition that has already been indicated above, in order for those flows to converge at the common point of intersection of the axes thereof to give rise to the formation of the insecticidal and/or fungicidal mist as already described above.

## Claims

1. A process for forming insecticidal and/or fungicidal mists characterised in that it comprises producing a first atomised flow of a composition comprising, per 100 cc, from 28 to 42 cc of aqueous ammonia at 26° Beaumé, 0.8 tro 1.2 cc of ethylene glycol, 4 to 6 cc of propanetriol, 4 to 6 g of sodium chloride, 3.2 to 4.8 cc of ethanol, 16 to 24 cc of the demineralised water and 24 to 36 cc of propellant; producing simultaneously with the first flow a second atomised flow of a composition comprising, per 100 cc, 12 to 18 cc of $SiCl_4$, 3.2 to 4.8 cc of $CCl_4$, 0.8 to 1.2 g of silver iodide, 12 to 18 cc of solvent(s), 12 to 18 cc of an insecticide, fungicide or a mixture thereof, and 40 to 60 cc of propellant; directing the two flows towards the same point and causing them to meet each other.

2. A process according to claim 1 in which the insecticide is a pyrethrin.

3. An apparatus for carrying out the process claimed in claim 1 or 2 comprising a support fitment (1 to 5) for a container (6, 7) for each of the compounds corresponding to the first and second flows, each container being provided with an atomiser value actuated by a pushbutton (8, 9) with an outlet orifice whose axis is directed to the same point of intersection, the two pushbuttons (8, 9) being connected by a depressor plate (10) on which there is disposed an actuating bar (11) which is pivotally connected to the support fitment (3).

4. An apparatus according to claim 3 in which the outlet orifice of each pushbutton (8, 9) is from 0.30 to 0.55 mm in diameter.

Fig. 1

Fig. 2

EP 0 313 414 A1

FIG. 3

EP 0 313 414 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | AU-A- 57 222 (A.A. PORTAS et al.)<br>* Claims *<br>--- | 1 | A 01 N 25/06<br>B 05 B 7/24<br>B 65 D 83/14<br>C 06 D 3/00 |
| A | DE-C- 871 981 (BAYER AG)<br>* Page 1, line 1 - page 2, line 14 *<br>--- | 1 | |
| X | DE-A-1 931 751 (W. BLANKSCHEIN)<br>* Figures 3-5; claims 1,4-7 *<br>----- | 3,4 | |

TECHNICAL FIELDS SEARCHED (Int. Cl.4)

A 01 N
B 05 B
B 65 D
C 06 D

The present search report has been drawn up for all claims

| Place of search | Date of completion of the search | Examiner |
|---|---|---|
| THE HAGUE | 09-02-1989 | DECORTE D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P0401)